# EUROPEAN PATENT APPLICATION

(11) **EP 2 196 126 A1**
(43) Date of publication of application: **16.06.2010**
(21) Application number: 08021578.3
(22) Date of filing: 12.12.2008
(51) Int. Cl.: A47L 15/42, D06F 29/00, D06F 39/00, D06F 58/24

(54) **A system with at least two household appliances**

(71) Applicant: Electrolux Home Products Corporation N.V., 1930 Zaventem (BE)
(72) Inventor: Pezzutto, Alberto, 31045 Motta di Livenza (Treviso) (IT); Celotto, Monica, 31045 Motta di Livenza (Treviso) (IT)
(74) Representative: Hochmuth, Jürgen

(57) **Abstract**

The present invention relates to a system with at least two household appliances, comprising at least one first household appliance generating waste heat in a cavity (10) and/or in an air duct, at least one second household appliance (12) using heated and/or preheated water, at least one heat exchanger (14, 20) for heating and/or pre-heating the water by the waste heat, and at least one reservoir (14) for storing water.

According to a first embodiment of the invention the system comprises an air pipe (20) connected to the cavity (10) and/or to the air duct, respectively, wherein a portion of said air pipe (20) extends within the reservoir (14), so that the air pipe (20) and the reservoir (14) form a water-to-air heat exchanger. According to a second embodiment of the invention the system comprises a water pipe (24) connected to the reservoir (14), wherein a portion of said water pipe (24) encloses at least partially the cavity (10) and/or the air duct, so that the water pipe (24) on the one hand and the cavity (10) on the other hand form a water-to-air heat exchanger.

## Description

The present invention relates to a system with at least two household appliances according to the preambles of claims 1 and 5.

Several household appliances, e.g. ovens or laundry driers, generate heat during operation. Other household appliances, e.g. dishwashing machines or washing machines, require heated or pre-heated water. The energy consumption can be reduced, if the waste heat of the former household appliances is used for heating or pre-heating the water of the other household appliances.

DE 100 45 074 A1 discloses a system with one or more household appliances and a latent heat accumulator, wherein the latent heat accumulator is supplied by thermal solar energy and/or geothermal energy. Further, the waste heat of the oven can be used for heating or pre-heating the water of the dishwashing machine. However, the system includes components with a high complexity.

It is an object of the present invention to provide a system with at least two household appliances, which allows a heat recovery with low complexity.

The object of the present invention is achieved by the system according to claim 1.

According to a first embodiment of the present invention the system comprises an air pipe connected to the cavity and/or to the air duct, respectively, wherein a portion of said air pipe extends within the reservoir, so that the air pipe and the reservoir form a water-to-air heat exchanger.

The main idea of the present invention is the water-to-air heat exchanger with a minimum complexity. The heat exchanger can use components already present in the system. If the waste heat generating household appliance is an oven, then the air pipe is preferably connected to the cavity of said oven. If the waste heat generating household appliance is a laundry drier, then the air pipe is preferably connected to the air duct of said laundry drier. Further, a fan in the cavity and/or in the air duct can be used for blowing the hot air from the cavity and/or the air duct, respectively, through the air pipe.

Further, the air pipe may comprise a plurality of parallel and/or serial air pipes. The plurality of parallel and/or serial air pipes allows an improved heat exchange.

In the preferred embodiment of the present invention both ends of the air pipe are connected to the cavity and/or to the air duct, so that the air pipe on the one hand and the cavity and/or the air duct one the other hand form a closed loop. The energy of the hot air in the cavity and/or in the air duct can optimally be used for heating the water in the reservoir.

In order to control the air flow from the cavity and/or from the air duct at least one air valve may be interconnected within the air pipe between the cavity and/or the air duct on the one hand and the reservoir on the other hand. The air valve can be opened, when the first household appliance disuses the hot air in the cavity and/or in the air duct. Then said hot air can be used for heating or pre-heating the water in the reservoir.

In a similar way at least one fan may be interconnected within the air pipe between the cavity and/or the air duct on the one hand and the reservoir on the other hand. The fan increases the velocity and the turbulence of the air, so that the efficiency of the heat exchanger is improved.

According to a second embodiment of the present invention the system comprises a water pipe connected to the reservoir, wherein a portion of said water pipe encloses at least partially the cavity and/or to the air duct, so that the water pipe on the one hand and the cavity and/or the air duct on the other hand form a water-to-air heat exchanger.

The main idea of the present invention is the water-to-air heat exchanger with a minimum complexity. The heat exchanger can use components already present in the system. In particular, the walls of the cavity and/or the air duct, respectively, are used as a part of the water-to-air heat exchanger. If the waste heat generating household appliance is an oven, then the water pipe preferably encloses at least partially the cavity of said oven. If the waste heat generating household appliance is a laundry drier, then the water pipe preferably encloses at least partially the air duct of said laundry drier.

Further, the water pipe comprises a plurality of parallel and/or serial water pipes. The plurality of parallel and/or serial water pipes allows an improved heat exchange.

In the preferred embodiment of the present invention both ends of the water pipe are connected to the reservoir, so that the water pipe and the reservoir form a closed loop. The energy of the hot air in the cavity and/or in the air duct can optimally be used for heating the water in the water pipe. For example, at least one water pipe has a serpentine form at the cavity and/or at the air duct, respectively.

In order to control the heat exchange at least one water pump may be interconnected within the water pipe between the cavity and/or the air duct on the one hand and the reservoir on the other hand. Thus, the heat exchange can be performed during the cavity and/or to the air duct, respectively, can be cooled down.

In a similar way, at least one propeller may be interconnected within the water pipe between the cavity and/or the air duct on the one hand and the reservoir on the other hand. The propeller increases the water turbulence, so that the efficiency of the heat exchanger is improved.

Further, the system may comprise at least one casing enclosing the first household appliance, the second household appliance and the reservoir. The common casing allows a compact construction of the system with more household appliances. The first household appliance and the second household appliance may be arranged vertically or horizontally.

Preferably, the reservoir is made of at least one heat insulating material and/or is enclosed by at least one heat insulating material. The heat insulating material contributes substantially to the saving of energy. The water in the reservoir can be stored a longer time without loss of energy.

In particular, the reservoir is arranged between the cavity and/or the air duct, respectively, of the first household appliance and the second household appliance. This arrangement contributes to the low complexity of the system.

In a preferred example of the inventive system the first household appliance is an oven and/or the second household appliance is a dishwashing machine or a washing machine. The waste heat of the oven can effectively be used for heating or pre-heating the water for the dishwashing machine or washing machine, respectively.

In a further example of the inventive system the first household appliance is a laundry drier and/or the second household appliance is a washing machine or a dishwashing machine. The waste heat of the laundry drier can effectively be used for heating or pre-heating the water for the washing machine or the dishwashing machine, respectively.

Novel and inventive features of the present invention are set forth in the appended claims.

The invention will be described in further detail with reference to the drawing, in which
- FIG 1: illustrates a schematic side view of a system with two household appliances according to a first embodiment of the present invention, and
- FIG 2: illustrates a schematic side view of the system with two household appliances according to a second embodiment of the present invention.

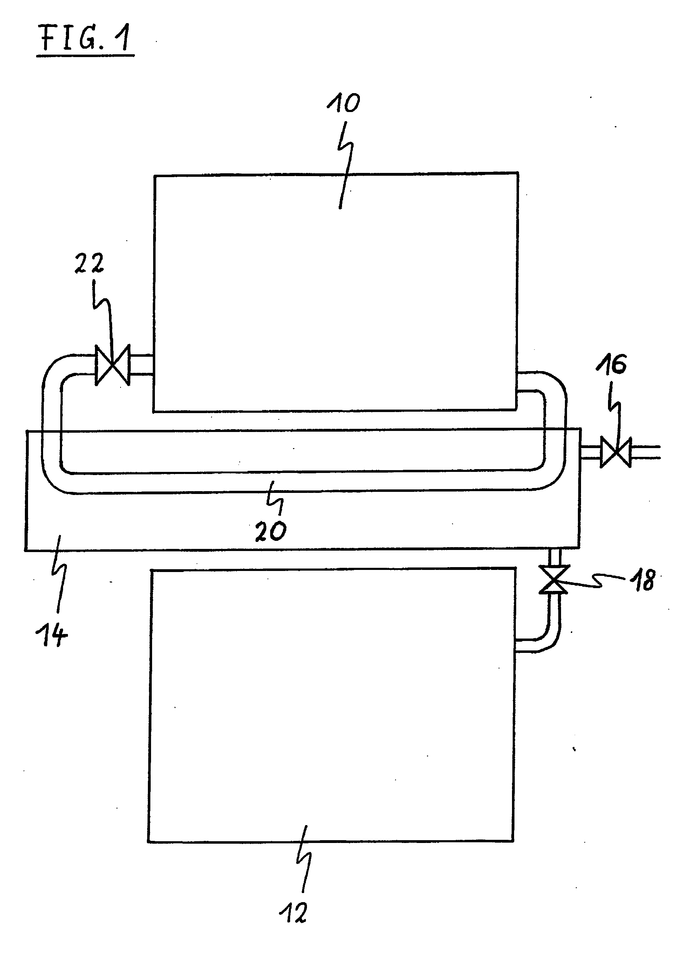

FIG 1 illustrates a schematic side view of a system with two household appliances according to a first embodiment of the present invention. The system includes an oven and a dishwashing machine 12. In this example, an oven cavity 10 forms an upper part and the dishwashing machine 12 forms a lower part of the system.

In general, the system comprises at least one household appliance generating waste heat and at least one further household appliance using heated or pre-heated water. According to another example, the system also may include a laundry drier and a washing machine. The described embodiments relate to the system with the oven and dishwashing machine 12.

A reservoir 14 is arranged between the oven cavity 10 and the dishwashing machine 12. The reservoir 14 is provided for storing water for the dishwashing machine 12. Preferably, the reservoir 14 is thermally insulated. For example, the container of the reservoir 14 is made of at least one heat insulating material. Alternatively or additionally, the container of the reservoir 14 is enclosed by at least one heat insulating material.

The reservoir 14 comprises an inlet valve 16 and an outlet valve 18. The inlet valve 16 is connected to an upper portion of the reservoir 14 and connectable to a water supply system. The outlet valve 18 is interconnected between a lower portion of the reservoir 14 and the dishwashing machine 12.

Further, an air pipe 20 is connected to the oven cavity 10. Both ends of said air pipe 20 are connected to the oven cavity 10, so that the air pipe 20 and the oven cavity 10 form a closed loop. A substantial portion of the air pipe 20 extends through the internal space of the reservoir 14. Between the oven cavity 10 and the reservoir 14 the air pipe 20 comprises an air valve 22. Alternatively, the integrated system comprises two or more parallel air pipes 20.

The reservoir 14 and the air pipe 20 within the reservoir 14 form a heat exchanger, i.e. a water-to-air heat exchanger. Said heat exchanger is provided for heating water in the reservoir 12 by hot air in the air pipe 20. The hot air is produced in the oven cavity 10. The waste heat of the oven cavity 10 is used for heating the water in the reservoir 14. In particular, the waste heat of the oven cavity 10 is used after the cooking procedure in the oven cavity 10 has been finished. Typically, the temperature of the heat in the oven cavity 10 is about between 150°C and 200°C.

Additionally or alternatively, the waste heat within an air duct can be used. Said air duct play a similar role like the oven cavity 10 described above. If the waste heat generating household appliance is a laundry drier instead of the oven, then the air duct of said laundry drier can be used in similar way as the cavity 10 of the oven.

Further, at least one fan, which is not shown in FIG 1, may be interconnected within the air pipe 20. For example, said fan may be arranged between the cavity 10 and/or the air duct on the one hand and the reservoir 14 on the other hand. The fan increases the velocity and the turbulence of the air, so that the efficiency of the heat exchanger is improved.

The procedure of reusing the waste heat of the oven cavity 10 is described hereinafter. Said procedure can be performed manually by the user. In this case, the system comprises temperature indicators for displaying the temperatures in the oven cavity 10 and in the reservoir 14. Further, said procedure can be performed automatically by a control unit. Said control unit comprises electric, electronic and/or mechanic elements.

As soon as the oven has been switched off, the inlet valve 16 is opened. Thus, water is loaded into the reservoir 14 from the water supply. Then, the air valve 22 is opened, so that hot air from the oven cavity 10 flows through the air pipe 20. The hot air is blown by a fan of the oven cavity 10 and/or by a special fan arranged within the air pipe 20 behind the air valve 22. On the one hand the hot air warms up the water in the reservoir 14. On the other hand the hot air itself is cooled down. Thus, the oven cavity 10 is also cooled down.

After a time the water in the reservoir 14 reaches a temperature which is sufficient for the operation of the dishwashing machine 12. In this case, the dishwashing machine 12 can use the water in the reservoir 14 without using its own heater. The outlet valve 18 is opened in order to convey the water to the dishwashing machine 12.

Alternatively, the water in the reservoir 14 is pre-heated, so that the heater of the dishwashing machine 12 heats up the water to its predetermined end temperature. In this case, the outlet valve 18 is opened at first and then the water is completely heated by the dishwashing machine 12.

In a similar way, the procedure as described above can also be applied to the system with the laundry drier instead of the oven. In this case, the air duct has a similar function as the oven cavity 10.

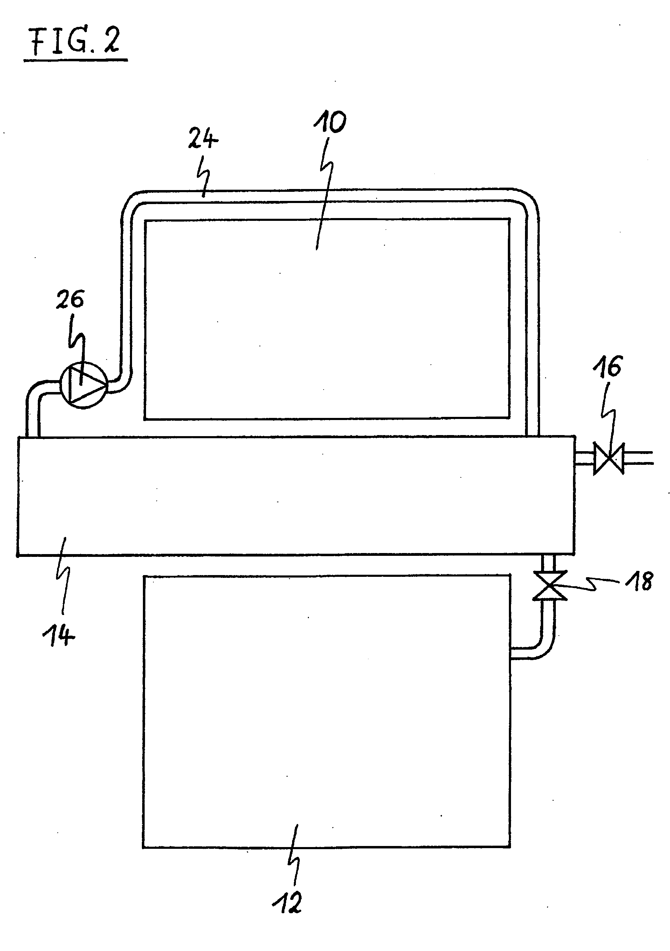

FIG 2 illustrates a schematic side view of a system with two household appliances according to a second embodiment of the present invention. The system includes also the oven and the dishwashing machine 12, wherein the oven cavity 10 forms the upper part and the dishwashing machine 12 forms the lower part of the system.

The reservoir 14 is arranged between the oven cavity 10 and the dishwashing machine 12. The reservoir 14 is also provided for storing water for the dishwashing machine 12. In particular, the reservoir 14 is thermally insulated. In this case, the container of the reservoir 14 is either made of at least one heat insulating material or enclosed by at least one heat insulating material.

The reservoir 14 comprises the inlet valve 16 and the outlet valve 18. The inlet valve 16 is connected to the upper portion of the reservoir 14 and connectable to the water supply system. The outlet valve 18 is interconnected between the lower portion of the reservoir 14 and the dishwashing machine 12.

Unlike in the first embodiment according to FIG 1, a water pipe 24 is connected to the reservoir 14. Both ends of said water pipe 24 are connected to the reservoir 14, so that the water pipe 24 and the reservoir 14 form a closed loop.

A water pump 26 is interconnected in the water pipe 24 near the reservoir 14. The water pipe 24 encloses the oven cavity 10, so that the water circulates around the oven cavity 10. For example, the water pipe 24 at the oven cavity 10 has a serpentine form. Alternatively or additionally, the water pipe 24 may comprise more parallel water pipes 24 enclosing the oven cavity 10.

The oven cavity 10 and the water pipe 24 at the oven cavity 10 form a heat exchanger, i.e. a water-to-air heat exchanger. Said heat exchanger is provided for heating water in the water pipe 24 by the hot air in the oven cavity 10. The hot air is produced in the oven cavity 10. The waste heat of the oven cavity 10 is used for heating the water in the water pipe 24. In particular, the waste heat of the oven cavity 10 is used after the cooking procedure in the oven cavity 10 has been finished. Typically, the temperature of the heat in the oven cavity 10 is about between 150°C and 200°C.

Additionally or alternatively, the waste heat within an air duct can be used. Said air duct play a similar role like the oven cavity 10 described above. If the household appliance generating the waste heat is a laundry drier instead of the oven, then the air duct of said laundry drier can be used in similar way as the cavity 10 of the oven.

Further, the heat exchanger may comprise at least one propeller, which is not shown in FIG 2, within the water pipe 24 and/or the reservoir 14 in order to increase the water turbulence. This improves the efficiency of the heat exchanger.

The procedure of reusing the waste heat of the oven cavity 10 is described hereinafter. Said procedure can be performed manually by the user. In this case, the system comprises temperature indicators for displaying the temperatures in the oven cavity 10 and in the reservoir 14. Further, said procedure can be performed automatically by the control unit comprising electric, electronic and/or mechanic elements.

As soon as the oven has been switched off, the inlet valve 16 is opened, and water is loaded into the reservoir 14 from the water supply. Then, the water pump 26 is switched on, and water from the reservoir 14 flows through the water pipe 24. Said water circulates through the water pipe 24 and the reservoir 14. The hot air in the oven cavity 10 warms up the water in the water pipe 24. Thus, the water in the reservoir 14 is heated. Otherwise the hot air itself is cooled down by the water. The oven cavity 10 is cooled down faster as without the water pipe 24.

After a time the water in the reservoir 14 and water pipe 24 reaches a temperature, which is sufficient to be used by the dishwashing machine 12. In this case, the dishwashing machine 12 can directly use the water in the reservoir 14 without using its own heater. Then, the outlet valve 18 is opened in order to convey the water to the dishwashing machine 12.

Alternatively, the water in the reservoir 14 and water pipe 24 is only pre-heated, so that the heater of the dishwashing machine 12 heats up the water to its predetermined end temperature. In this case,' the outlet valve 18 is opened at first and then the water is completely heated by the dishwashing machine 12.

In a similar way, the above procedure can also be applied to the system with the laundry drier instead of the oven. In this case, the air duct has a similar function as the oven cavity 10.

In general, the system according to the invention comprises at least two heat generating household appliances. The invention is not restricted to the integrated system with the oven and the dishwashing machine 12. Instead of the oven other household appliances generating waste heat can be used. Instead of the dishwashing machine 12 each other household appliance requiring heated or pre-heated water can be used.

Preferably; the reservoir 14 has the shape of a frustum of pyramid and the outlet valve 18 is arranged in a low position of said reservoir 14. Thus, the reservoir 14 can be completely emptied.

In a further embodiment of the present invention, the reservoir 14 comprises at least one further outlet valve. By said further outlet valve the user can take heated or pre-heated water directly from the reservoir 14. The further outlet valve can be connected to an external household appliance requiring heated or preheated water.

The integrated system according to the present invention allows the saving of energy, since the waste heat of the oven cavity 10 and/or the air duct is used for pre-heating the water of the dishwashing machine 12. Further, the oven cavity 10 or the air duct is cooled faster than a conventional cavity or air duct, respectively. The food cooked in the oven cavity 10 is also cooled faster as in a conventional cavity. Thus, the food can faster be served, eaten and put into refrigerator or freezer.

Although illustrative embodiments of the present invention have been described herein with reference to the accompanying drawing, it is to be understood that the present invention is not limited to those precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: cavity, oven cavity
- 12: dishwashing machine
- 14: reservoir
- 16: inlet valve
- 18: outlet valve
- 20: air pipe
- 22: air valve
- 24: water pipe
- 26: water pump

## Claims

1. A system with at least two household appliances, comprising
- at least one first household appliance generating waste heat in a cavity (10) and/or in an air duct,
- at least one second household appliance (12) using heated and/or preheated water,
- at least one heat exchanger (14, 20) for heating and/or pre-heating the water by the waste heat, and
- at least one reservoir (14) for storing water,
**characterized in, that**
the system comprises an air pipe (20) connected to the cavity (10) and/or to the air duct, respectively, wherein a portion of said air pipe (20) extends within the reservoir (14), so that the air pipe (20) and the reservoir (14) form a water-to-air heat exchanger, and/or **characterized in, that**
the system comprises a water pipe (24) connected to the reservoir (14), wherein a portion of said water pipe (24) encloses at least partially the cavity (10) and/or the air duct, so that the water pipe (24) on the one hand and the cavity (10) and/or the air duct on the other hand form a water-to-air heat exchanger.

2. The system according to claim 1,
**characterized in, that**
the air pipe (20) comprises a plurality of parallel and/or serial air pipes.

3. The system according to claim 1 or 2,
**characterized in, that**
both ends of the air pipe (20) are connected to the cavity (10) and/or to the air duct, so that the air pipe (20) and the cavity (10) and/or the air duct, respectively, form a closed loop.

4. The system according to any one of the preceding claims,
**characterized in, that**
at least one air valve (22) and/or at least one fan are interconnected within the air pipe (20) between the cavity (10) and/or the air duct on the one hand and the reservoir (14) on the other hand.

5. The system according to one of claims 1 to 4,
**characterized in, that**
the water pipe (24) comprises a plurality of parallel and/or serial water pipes.

6. The system according to one of claims 1 to 5,
**characterized in, that**
both ends of the water pipe (24) are connected to the reservoir (14), so that the water pipe (24) and the reservoir (14) form a closed loop.

7. The system according to any one of the claims 1 to 6,
**characterized in, that**
at least one water pipe (24) has a serpentine form at the cavity.

8. The system according to any one of the claims 1 to 7,
**characterized in, that**
at least one water pump (26) and/or at least one propeller is interconnected within the water pipe (24) between the cavity (10) and/or the air duct on the one hand and the reservoir (14) on the other hand.

9. The system according to any one of the preceding claims,
**characterized in, that**
the system comprises at least one casing enclosing the first household appliance (10), the second household appliance (12) and the reservoir (14).

10. The system according to any one of the preceding claims,
**characterized in, that**
the first household appliance (10) and the second household appliance (12) are arranged vertically or horizontally.

11. The system according to any one of the preceding claims,
**characterized in, that**
the reservoir (14) is made of at least one heat insulating material and/or is enclosed by at least one heat insulating material.

12. The system according to any one of the preceding claims,
**characterized in, that**
the reservoir (14) is arranged between the cavity (10) and/or to the air duct, respectively, of the first household appliance on the one hand and the second household appliance (12) on the other hand.

13. The system according to any one of the preceding claims,
**characterized in, that**
the first household appliance is an oven (10) and/or the second household appliance is a dishwashing machine (12) or a washing machine.

14. The system according to any one of the preceding claims,
**characterized in, that**
the first household appliance is a laundry drier and/or the second household appliance is a dishwashing machine (12) or a washing machine.
